# EUROPÄISCHE PATENTANMELDUNG

(11) **EP 2 876 039 A1**
(43) Veröffentlichungstag der Anmeldung: **27.05.2015**
(21) Anmeldenummer: 13193642.9
(22) Anmeldetag: 20.11.2013
(51) Int. Cl.: B63H 5/125

(54) **Kühlung eines elektrischen Gondelantriebs**

(71) Anmelder: Siemens Aktiengesellschaft, 80333 München (DE)
(72) Erfinder: Balzer, Christoph, 10437 Berlin (DE); Seibicke, Frank, 14822 Borkheide (DE)

(57) **Zusammenfassung**

Die Erfindung betrifft einen elektrischen Gondelantrieb für ein Schiff aufweisend ein Gondelgehäuse (1), einen im Gondelgehäuse (1) angeordneten Elektromotor mit einem Stator (2) und einem Rotor (3), welcher koaxial zu einer Rotationsachse (4) des Elektromotors angeordnet ist, und einen Gondelschaft (5), mittels welchem das Gondelgehäuse (1) drehbar mit einem Schiffsrumpf verbindbar ist. Weiterhin betrifft die Erfindung ein Schiff mit einem derartigen elektrischen Gondelantrieb. Um eine Alternative zu bekannten Kühlkonzepten für einen elektrischen Gondelantrieb bereitzustellen, wird vorgeschlagen, dass der elektrische Gondelantrieb einen geschlossenen Kühlkreislauf aufweist, welcher im Gondelschaft (5) und im Gondelgehäuse (1) verläuft, wobei der geschlossene Kühlkreislauf zumindest einen im Gondelschaft (5) angeordneten Schaftkanal (6), welcher im Wesentlichen parallel zur Rotationsachse (4) des Elektromotors verläuft, und zumindest ein Rückkühlelement (7), welches zumindest teilweise im zumindest einen Schaftkanal (6) angeordnet ist, aufweist, wobei der geschlossene Kühlkreislauf derart ausgestaltet ist, dass Abwärme des Elektromotors durch ein im geschlossenen Kühlkreislauf zirkulierendes Kühlmedium aufnehmbar ist und über das zumindest eine Rückkühlelement (7) abgebbar ist.

## Beschreibung

Die Erfindung betrifft einen elektrischen Gondelantrieb für ein Schiff aufweisend ein Gondelgehäuse, einen im Gondelgehäuse angeordneten Elektromotor mit einem Stator und einem Rotor, welcher koaxial zu einer Rotationsachse des Elektromotors angeordnet ist, und einen Gondelschaft, mittels welchem das Gondelgehäuse drehbar mit einem Schiffsrumpf verbindbar ist. Weiterhin betrifft die Erfindung ein Schiff mit einem derartigen elektrischen Gondelantrieb.

Ein derartiger elektrischer Gondelantrieb kommt beispielsweise als Antriebseinheit bei einem Schiff oder allgemein bei einem Wasserfahrzeug zum Einsatz, wobei sich der Gondelantrieb im Allgemeinen außerhalb des Schiffsrumpfes und unterhalb des Wasserspiegels, insbesondere im Meerwasser, befindet und einen Propeller antreibt. Derartige Gondelantriebe sind auch unter der Bezeichnung POD-Antriebe bekannt und weisen üblicherweise eine elektrische Leistung im Megawattbereich, insbesondere von mehr als 5 MW auf. Dabei muss bei einem solchen elektrischen Gondelantrieb die Verlustwärme der elektrischen Maschine in geeigneter Form abgeführt werden, um die Maschine während des Betriebs auf einem konstanten und akzeptablen Temperaturniveau zu halten.

Die Wärmeabfuhr des Stators geschieht bisher über die Oberfläche des Gehäuses durch Konvektion. Das Statorblechpaket ist in ein Gehäuse eingeschrumpft, wodurch ein guter Wärmeübergang gewährleistet wird. Hierfür muss das Gehäuse zwingend eine ausreichende Wärmeleitfähigkeit aufweisen. Da das Maschinengehäuse aber im salzigen Meerwasser betrieben wird, ist ebenfalls eine ausreichende Korrosionsbeständigkeit erforderlich. Dies wurde bisher durch die Verwendung eines Gehäuses aus einer Kupfer-Aluminium-Legierung bzw. Bronze erreicht, was allerdings erhebliche Kosten verursacht.

Hinzu kommt, dass die Wickelköpfe dadurch nicht ausreichend gekühlt werden können, da sie das Gehäuse nicht berühren und somit die Wärme nicht direkt an das Gehäuse und somit an das Wasser übertragen werden kann.

Aus der EP 0 590 867 A1 ist eine Antriebseinheit für ein Schiff bekannt, wobei die Antriebseinheit eine Gondel mit einem Elektromotor aufweist, welche über einen Schaft drehbar an einem Schiffsrumpf befestigt ist. Zur Kühlung des Elektromotors sind im Schaft angeordnete Kühlkanäle vorgesehen, welche sich bis ins Innere des Schiffsrumpfs erstrecken, wo ein Wärmetauscher zur Rückkühlung des in den Kühlkanälen befindlichen Kühlmediums vorgesehen ist. Im Schiffsrumpf sind separate Kühlmodule, bestehend aus Fremdlüftern und Luft-/ Wasserkühlern, neben der Verstelleinheit bzw. dem Azimutmodul angeordnet, wobei die Kühlluft über die Kühlkanäle im Verbindungsschaft zum Antriebsmotor geleitet wird.

Der Erfindung liegt die Aufgabe zugrunde, eine Alternative zu bekannten Kühlkonzepten für einen elektrischen Gondelantrieb bereitzustellen.

Diese Aufgabe wird durch einen elektrischen Gondelantrieb der eingangs genannten Art dadurch gelöst, dass der elektrische Gondelantrieb einen geschlossenen Kühlkreislauf aufweist, welcher im Gondelschaft und im Gondelgehäuse verläuft, wobei der geschlossene Kühlkreislauf zumindest einen im Gondelschaft angeordneten Schaftkanal, welcher im Wesentlichen parallel zur Rotationsachse des Elektromotors verläuft, und zumindest ein Rückkühlelement, welches zumindest teilweise im zumindest einen Schaftkanal angeordnet ist, aufweist, wobei der geschlossene Kühlkreislauf derart ausgestaltet ist, dass Abwärme des Elektromotors durch ein im geschlossenen Kühlkreislauf zirkulierendes Kühlmedium aufnehmbar ist und über das zumindest eine Rückkühlelement abgebbar ist.

Weiterhin wird diese Aufgabe durch ein Schiff mit einem derartigen elektrischen Gondelantrieb gelöst.

Der geschlossene Kühlkreislauf verläuft somit im Gondelschaft und im Gondelgehäuse. Vorzugsweise verläuft der geschlossene Kühlkreislauf vollständig außerhalb des Schiffsrumpfs und dringt somit nicht in den Schiffsrumpf ein. Das im geschlossenen Kühlkreislauf zirkulierende Kühlmedium durchströmt das Gondelgehäuse und nimmt während des Betriebs des Elektromotors entstehende Abwärme auf. Das Kühlmedium gibt die vom Elektromotor aufgenommene Abwärme anschließend während des Durchströmens des Gondelschafts wieder ab. Dabei findet die Wärmeabgabe im zumindest einen Schaftkanal statt, wobei die Abwärme des Elektromotors vom Kühlmedium an das zumindest eine Rückkühlelement abgebbar ist.

Damit die Kühlmittelströmung vom Gondelgehäuse in den zumindest einen Schaftkanal bzw. vom zumindest einen Schaftkanal in das Gondelgehäuse strömen kann, kann das Gondelgehäuse jeweils zumindest eine erste Öffnung bzw. zumindest eine zweite Öffnung aufweisen. Vorzugsweise ist die jeweilige erste Öffnung im axialen Bereich des einen axialen Endes des Elektromotors angeordnet und die jeweilige zweite Öffnung im axialen Bereich des anderen, gegenüberliegenden axialen Endes des Elektromotors angeordnet. Somit können die jeweiligen Öffnungen beispielsweise im axialen Bereich eines jeweiligen Wickelkopfs angeordnet sein.

Insbesondere kann die Kühlmittelströmung im zumindest einen Schaftkanal derart ausgelegt und gewählt werden, dass sich eine Gegenströmung oder eine Gleichströmung des Kühlmittels bezüglich des während des Betriebs am Gondelantrieb vorbeiströmenden Wassers ergibt.

Der geschlossene Kühlkreislauf ist somit lediglich im gegenüber dem Schiffsrumpf drehbaren Gondelantrieb untergebracht. Insbesondere können damit komplizierte und für die Kühlmittelströmung ungünstige Engstellen und Umlenkungen eingespart werden, welche beispielsweise erforderlich sind, wenn das Kühlmittel vom drehbaren Gondelantrieb in den Schiffsrumpf geleitet werden muss. Insbesondere können Druckverluste im geschlossenen Kühlkreislauf vermieden werden, welche entweder zu einer verringerten Kühlleistung des Elektromotors führen oder eine besonders leistungsstarke Fremdbelüftung erfordern. Gleichzeitig wird die Komplexität des Azimutmoduls verringert, was insgesamt eine technisch weniger anfällige Konstruktion und eine erhebliche Kostenersparnis ermöglicht. Weitere Kosten können insbesondere dadurch eingespart werden, dass auf ein Maschinengehäuse aus Bronze verzichtet werden kann, welches nunmehr durch ein Stahlgehäuse substituiert werden kann.

Das zumindest eine Rückkühlelement erlaubt einen effizienten Wärmeentzug aus dem Kühlmedium, so dass letztendlich damit auch der Elektromotor effizient gekühlt werden kann. Beispielsweise kann das jeweilige Rückkühlelement als Wärmeübertrager bzw. Wärmetauscher ausgestaltet sein, wobei insbesondere zwei oder mehr Rückkühlelemente zum Einsatz kommen können, welche strömungstechnisch in Reihe oder parallel geschaltet sind. Insbesondere können metallische Bleche vorgesehen sein, welche zumindest teilweise in den zumindest einen Schaftkanal hineinragen und somit eine vergrößerte Oberfläche für den Wärmetransfer bereitstellen. Beispielsweise kann auch vorgesehen sein, dass das jeweilige Rückkühlelement Röhren aufweist, wobei die Röhren zumindest teilweise in den zumindest einen Schaftkanal hineinragen oder durch diesen hindurch geführt werden. Eine besonders hohe, dem Elektromotor zuführbare Kühlleistung lässt sich insbesondere durch die Verwendung von Gegenstrom-, Querstrom- oder Kreuzstrom-Rückkühlelementen erreichen. Die Anordnung des zumindest einen Rückkühlelement im Gondelschaft erlaubt dabei eine vergleichsweise einfache Wartung, da das jeweilige Rückkühlelement vom Schiffsrumpf vergleichsweise gut zugänglich ist.

Das jeweilige Rückkühlelement kann beispielsweise senkrecht auf dem Gondelgehäuse stehend mit dem Gondelgehäuse verbunden sein, insbesondere wenn das Gondelgehäuse im Wesentlichen rotationssymmetrisch bzw. zylinderförmig ausgestaltet ist. Somit wird für den geschlossenen Kühlkreislauf auch der Verbindungsschaft am Schiffsrumpf genutzt, wobei mit dem Schaftkanal auch jener Bereich des Verbindungsschafts genutzt wird, der direkt oberhalb des eigentlichen Elektroantriebs angeordnet ist, wodurch eine Art Huckepack-Anordnung realisiert wird.

Alternativ oder zusätzlich kann zumindest ein Rückkühlelement im Gondelgehäuse vorgesehen sein, insbesondere in Verlängerung des Elektromotors an dessen jeweiliger Stirnseite. Weist der Elektromotor zumindest einen Wickelkopf auf, so kann das jeweilige Rückkühlelement insbesondere im axialen Bereich des jeweiligen Wickelkopfs angeordnet sein.

Bei einer vorteilhaften Ausgestaltung der Erfindung ist ein weiterer Kühlkreislauf vorgesehen, welcher über das zumindest eine Rückkühlelement wärmetechnisch mit dem geschlossenen Kühlkreislauf gekoppelt ist.

Vorzugsweise werden dabei Luft als Kühlmedium im geschlossenen Kühlkreislauf und ein weiteres Kühlmedium in dem weiteren Kühlkreislauf vorgesehen, welches eine höhere spezifische Wärmekapazität aufweist. Beispielsweise können für das weitere Kühlmedium Wasser oder Öl zum Einsatz kommen.

Der weitere Kühlkreislauf kann insbesondere in den Schiffsrumpf hinein geführt werden, wobei durch den Einsatz eines weiteren Kühlmediums mit vergleichsweise hoher spezifischer Wärmekapazität ein vergleichsweise kleiner Volumenstrom bezüglich des weiteren Kühlkreislaufs erforderlich ist. Entsprechend können auch die Übergänge zwischen dem drehbaren Gondelschaft und dem Schiffsrumpf mit vergleichsweise kleinen Querschnitten versehen werden, so dass das Kühlsystem konstruktiv insgesamt einfacher ausgeführt werden kann.

Bei einer alternativen vorteilhaften Ausgestaltung der Erfindung ist das zumindest eine Rückkühlelement derart ausgeführt, dass die Abwärme an den Gondelantrieb umgebendes Wasser abgebbar ist.

Durch ein jeweiliges derartiges Rückkühlelement wird eine besonders einfache Konstruktion ermöglicht, mittels welcher gleichzeitig eine leistungsstarke Kühlung des Elektromotors gewährleistet werden kann. So kann beispielsweise eine Aufstellung eines separaten Kühlungsmoduls im Schiffsrumpf entfallen, wodurch erhebliche Platzersparnisse entstehen, welche anderweitig genutzt werden können. Insbesondere können Kühlkanäle und Gehäusestrukturen für ein Kühlmodul im Schiffsrumpf komplett eingespart werden.

Insbesondere kann das jeweilige Rückkühlelement derart ausgeführt werden, dass ein direkter Wärmetransfer zwischen dem Kühlmedium des geschlossenen Kühlkreislaufes und dem den Gondelantrieb umgebenden Wasser ermöglicht wird. Dafür können beispielsweise auch in das Wasser, welches den Gondelantrieb umgibt, hineinragende Bleche vorgesehen sein, damit das jeweilige Rückkühlelement eine möglichst große Oberfläche mit vergleichsweise tiefer Temperatur aufweist. Weiterhin kann das jeweilige Rückkühlelement Röhren aufweisen, durch welche das den Gondelantrieb umgebende Wasser fließen kann, wobei die Röhren zumindest teilweise in den Schaftkühlkanal hineinragen oder durch diesen hindurch geführt werden.

Dabei kann der elektrische Gondelantrieb auch zwei oder mehr Rückkühlelement aufweisen, wobei zumindest eines der Rückkühlelemente eine Kopplung des geschlossenen Kühlkreislaufes mit dem zuvor erläuterten weiteren Kühlkreislaufs ermöglicht, und zumindest eines der Rückkühlelemente eine Wärmeabgabe aus dem geschlossenen Kühlkreislauf heraus an das den Gondelantrieb umgebende Wasser ermöglicht.

Bei einer weiteren vorteilhaften Ausgestaltung der Erfindung weist der Stator zumindest einen Wickelkopf auf, welcher jeweils mit dem im geschlossenen Kühlkreislauf zirkulierenden Kühlmedium kühlbar ist.

Vorzugsweise wird der jeweilige Wickelkopf während des Betriebs des Elektromotors vom zirkulierenden Kühlmedium zumindest teilweise umströmt, was eine besonders gute Wärmeabfuhr an den Wickelköpfen des Elektromotors gewährleistet.

Bei einer weiteren vorteilhaften Ausgestaltung der Erfindung ist zumindest eine Strömungsmaschine zur Umwälzung des im geschlossenen Kühlkreislauf zirkulierenden Kühlmediums vorgesehen.

Die zumindest eine Strömungsmaschine erlaubt eine Erhöhung des Volumenstroms des Kühlmediums, wodurch die dem Elektromotor zuführbare Kühlleistung erhöht werden kann. Beispielsweise kann die zumindest eine Strömungsmaschine drehfest mit dem Rotor verbunden sein, wobei die jeweilige Strömungsmaschine insbesondere im Bereich des jeweiligen axialen Endes des Elektromotors angeordnet ist. Die zumindest eine Strömungsmaschine kann jedoch auch über ein Übersetzungsgetriebe mit dem Rotor verbunden sein.

Weist der Stator zumindest einen Wickelkopf auf, welcher mittels des Kühlmediums kühlbar ist, kann die jeweilige Strömungsmaschine beispielsweise als im axialen Bereich des Wickelkopfs des Stators angeordnete Radial-Strömungsmaschine ausgeführt sein. Dadurch wird eine vergrößerte Kühlmittelströmung in radialer Richtung zum jeweiligen Wickelkopf ermöglicht, wodurch die dem jeweiligen Wickelkopf zuführbare Kühlleistung erhöhbar ist. Ferner kann die Strömungsmaschine als Axial-Strömungsmaschine ausgeführt sein, welche beispielsweise strömungstechnisch vor dem jeweiligen Wickelkopf angeordnet ist, um insbesondere die dem jeweiligen Wickelkopf zuführbare Kühlleistung durch eine vergrößerte Kühlmittelströmung in axialer Richtung zum jeweiligen Wickelkopf zu erhöhen.

Besonders vorteilhaft ist dabei eine Kombination aus einer Axial-Strömungsmaschine, welche strömungstechnisch vor einem ersten Wickelkopf, dem Stator und dem Rotor und einem zweiten Wickelkopf angeordnet ist, und einer Radial-Strömungsmaschine, welche im axialen Bereich des zweiten Wickelkopfs angeordnet ist.

Bei einer weiteren vorteilhaften Ausgestaltung der Erfindung ist die zumindest eine Strömungsmaschine dabei jeweils im zumindest einen Schaftkanal strömungstechnisch stromaufwärts des zumindest einen Rückkühlelements angeordnet.

Die jeweilige, im zumindest einen Schaftkanal angeordnete Strömungsmaschine ist insbesondere unabhängig von der Drehzahl des Rotors des Elektromotors betreibbar und ermöglicht eine weitere Erhöhung der dem Elektromotor zuführbare Kühlleistung. Die jeweilige Strömungsmaschine ist strömungstechnisch stromaufwärts eines jeweiligen Rückkühlelements angeordnet, so dass das Kühlmedium zunächst durch die jeweilige Strömungsmaschine angesaugt wird und dabei etwas erwärmt wird, um anschließend durch das jeweilige Rückkühlelement zu strömen, wodurch das Kühlmedium abgekühlt wird. Insgesamt wird somit durch die jeweilige Strömungsmaschine die Umwälzung des Kühlmediums angetrieben, wobei gleichzeitig strömungstechnisch im Anschluss an die jeweilige Strömungsmaschine deren jeweilige Abwärme direkt dem Kühlmedium entzogen wird. Insbesondere können zwei oder mehr derartige Strömungsmaschinen zum Einsatz kommen können, welche strömungstechnisch in Reihe oder parallel geschaltet sind, wobei deren Anordnung mit den jeweiligen Rückkühlelementen abgestimmt ist.

Dabei kann die jeweilige Strömungsmaschine insbesondere als Axial-Strömungsmaschine ausgeführt sein, wobei das jeweilige, strömungstechnisch nachgeschaltete Rückkühlelement vorzugsweise zumindest teilweise in den zumindest einen Schaftkanal hineinragende Bleche aufweist, welche insgesamt als an die jeweilige Axial-Strömungsmaschine angepasster Nachleitapparat ausgebildet sind. Dabei dient der Nachleitapparat neben der oben beschriebenen Erhöhung der Kühlleistung durch seine Funktion als Rückkühlelement insbesondere der Unterdrückung von Turbulenzen im strömenden Kühlmedium, welche durch die jeweilige Strömungsmaschine verursacht werden können. Somit wird durch das jeweilige, als Nachleitapparat ausgeführte Rückkühlelement eine strömungstechnisch effiziente, laminare Strömung nach der jeweiligen Axial-Strömungsmaschine gewährleistet.

Denkbar ist dabei auch, dass das jeweilige Rückkühlelement strömungstechnisch stromaufwärts der jeweiligen Strömungsmaschine angeordnet ist und jeweils zumindest teilweise in den zumindest einen Schaftkanal hineinragende Bleche aufweist, welche insgesamt als an die jeweilige Axial-Strömungsmaschine angepasster Vorleitapparat ausgebildet sind. Vorzugsweise ist strömungstechnisch stromaufwärts und stromabwärts der jeweiligen Strömungsmaschine jeweils ein entsprechend ausgestaltetes Rückkühlelement vorgesehen, so dass in Strömungsrichtung zunächst ein als Vorleitapparat ausgestaltetes erstes Rückkühlelement, anschließend eine Axial-Strömungsmaschine und schließlich ein als Nachleitapparat ausgestaltetes zweites Rückkühlelement angeordnet sind.

Zusätzlich können eine oder mehrere der weiter oben beschriebenen Strömungsmaschinen zum Einsatz kommen, welche beispielsweise drehfest oder über ein Übersetzungsgetriebe mit dem Rotor verbunden sind.

Bei einer weiteren vorteilhaften Ausgestaltung der Erfindung weist der geschlossene Kühlkreislauf zumindest einen Motorkanal auf, welcher jeweils im Stator, im Rotor und/oder entlang eines Luftspalts zwischen dem Stator und dem Rotor verläuft.

Der jeweilige Motorkanal ist im Elektromotor im Gondelgehäuse angeordnet und verläuft im Wesentlichen in axialer Richtung. Hierzu ist der jeweilige Motorkanal im Stator, im Rotor und/oder entlang des Luftspalts angeordnet. Durch den jeweiligen Motorkanal wird der Elektromotor zuverlässig mit einem ausreichenden Volumenstrom des Kühlmediums versorgt, wodurch eine zuverlässige Kühlung des Elektromotors erreicht wird. Beispielsweise kann hierfür ein Rotorkühlkanal vorgesehen sein, der dadurch gebildet wird, dass der Rotor zumindest eine Aussparung zwischen einem Rotorblechpaket und einer Rotorwelle oder Bohrungen im Rotor aufweist. Alternativ oder zusätzlich kann auch ein Statorkühlkanal vorgesehen sein, der durch Bohrungen im Stator gebildet wird.

Bei einer weiteren vorteilhaften Ausgestaltung der Erfindung ist zumindest ein erstes Umlenkelement vorgesehen, mittels welchem jeweils das vom Gondelgehäuse in den zumindest einen Schaftkanal strömende Kühlmedium umlenkbar ist, wobei zumindest ein zweites Umlenkelement vorgesehen ist, mittels welchem jeweils das vom zumindest einen Schaftkanal in das Gondelgehäuse strömende Kühlmedium umlenkbar ist.

Das jeweilige Umlenkelement kann dabei insbesondere im Bereich der oben erläuterten jeweiligen Öffnung angeordnet sein bzw. die jeweilige Öffnung aufweisen und dient dazu, die Kühlmittelströmung strömungstechnisch effizient aus dem Gondelgehäuse in den zumindest einen Schaftkanal bzw. aus dem zumindest einen Schaftkanal in das Gondelgehäuse umzulenken. Während des Betriebs wird dabei im Gondelgehäuse vorwiegend eine axiale Strömung des Kühlmediums vorliegen, wobei vorzugsweise auch im zumindest einen Schaftkanal eine im Wesentlichen axiale Strömung des Kühlmediums gegeben ist, welche jener im Gondelgehäuse entgegengesetzt ist.

Bei einer weiteren vorteilhaften Ausgestaltung der Erfindung ist das zumindest eine erste Umlenkelement dabei als Umlenkdiffusor ausgestaltet.

Das als Umlenkdiffusor ausgestaltete jeweilige erste Umlenkelement bewirkt somit eine Vergrößerung des Querschnitts, welcher für das strömende Kühlmedium zur Verfügung steht. Durch den jeweiligen Umlenkdiffusor wird die Kühlmittelströmung verlangsamt, so dass im strömungstechnisch nach dem Umlenkdiffusor angeordneten Bereich ein höherer statischer Druck vorliegt. Vorteilhafterweise ist dabei die oben erläuterte, zumindest eine Strömungsmaschine im zumindest einen Schaftkanal angeordnet.

Bei einer weiteren vorteilhaften Ausgestaltung der Erfindung ist das zumindest eine zweite Umlenkelement dabei als Umlenkdüse ausgestaltet.

Durch das jeweilige zweite Umlenkelement wird der für das Kühlmedium zur Verfügung stehende Strömungsquerschnitt verkleinert, wodurch die Strömungsgeschwindigkeit erhöht wird und strömungstechnisch nach der Umlenkdüse ein geringerer statischer Druck im Kühlmittel vorliegt. Wiederum ist vorteilhafterweise die oben erläuterte, zumindest eine Strömungsmaschine im zumindest einen Schaftkanal angeordnet.

Insbesondere sind das erste Umlenkelement und/oder das zweite Umlenkelement derart ausgebildet, dass der jeweilige Wickelkopf zumindest von einem Teilstrom der Kühlmittelströmung des geschlossenen Kühlkreislaufes umströmt wird. Insbesondere ist das zweite Umlenkelement vorteilhafterweise derart ausgebildet, dass die Kühlmittelströmung auf den strömungstechnisch nach dem zweiten Umlenkelement angeordneten Wickelkopf geleitet wird.

Im Folgenden wird die Erfindung anhand der in den Figuren dargestellten Ausführungsbeispiele näher beschrieben und erläutert. Es zeigen:
- FIG 1: ein erstes Ausführungsbeispiel des erfindungsgemäßen elektrischen Gondelantriebs,
- FIG 2: ein zweites Ausführungsbeispiel des erfindungsgemäßen elektrischen Gondelantriebs, und
- FIG 3: ein drittes Ausführungsbeispiel des erfindungsgemäßen elektrischen Gondelantriebs.

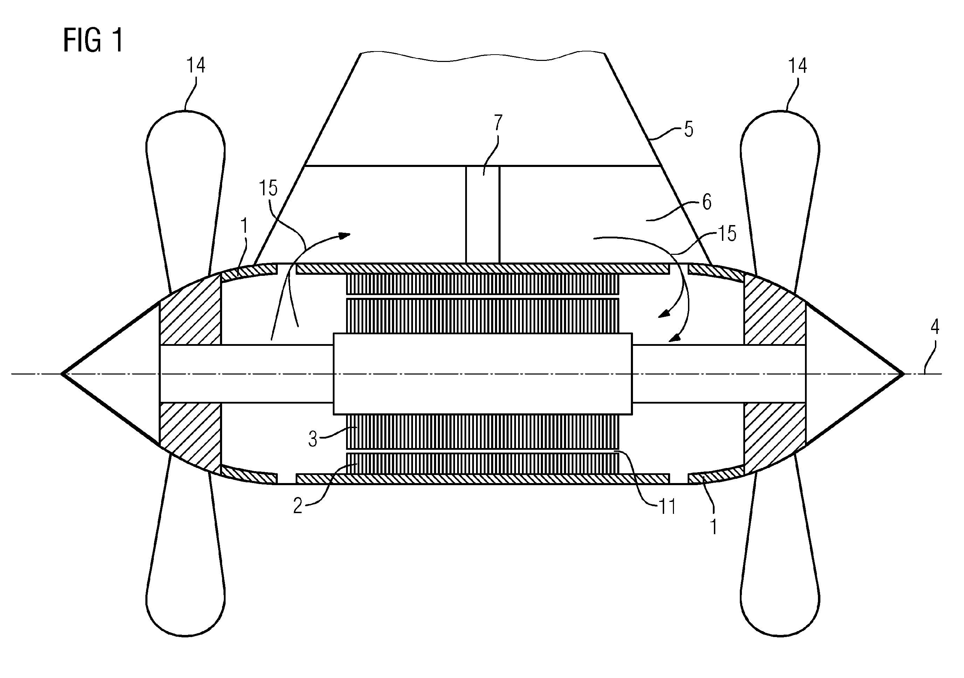

Figur 1 zeigt ein erstes Ausführungsbeispiel des erfindungsgemäßen elektrischen Gondelantriebs, wobei ein Längsschnitt dargestellt ist. Der elektrische Gondelantrieb weist ein Gondelgehäuse 1 auf, in welchem ein Elektromotor mit einem Stator 2 und einem Rotor 3 untergebracht ist, wobei zwischen dem Stator 2 und dem Rotor 3 ein Luftspalt 11 verbleibt. Dabei ist der Rotor 3 koaxial zu einer Rotationsachse 4 des Elektromotors angeordnet. Das Gondelgehäuse 1 ist über einen Gondelschaft 5 drehbar mit einem Schiffsrumpf verbindbar. Zum Antrieb eines mit dem elektrischen Gondelantrieb verbundenen Schiffs sind Propeller 14 vorgesehen, welche drehfest oder über ein Übersetzungsgetriebe mit dem Rotor 3 verbunden sind.

Zur Kühlung des Elektromotors weist der elektrische Gondelantrieb einen geschlossenen Kühlkreislauf auf, in welchem ein Kühlmedium zirkuliert, was mit den Pfeilen mit dem Bezugszeichen 15 dargestellt ist. Der geschlossene Kühlkreislauf verläuft dabei im Gondelgehäuse 1 und in einem im Gondelschaft 5 angeordneten Schaftkanal 6, welcher im Wesentlichen parallel zur Rotationsachse 4 des Elektromotors verläuft. Das im geschlossenen Kühlkreislauf zirkulierende Kühlmedium nimmt während des Betriebs des Elektromotors dessen Abwärme auf und transportiert diese Abwärme in den Schaftkanal 6, in welchem ein Rückkühlelement 7 vorgesehen ist, an welches die Abwärme schließlich abgegeben werden kann.

Alternativ oder zusätzlich kann zumindest ein weiteres Rückkühlelement im Gondelgehäuse 1 vorgesehen sein, insbesondere in Verlängerung des Elektromotors an dessen jeweiliger Stirnseite. Weist der Elektromotor zumindest einen Wickelkopf auf, so kann das jeweilige Rückkühlelement insbesondere im axialen Bereich des jeweiligen Wickelkopfs angeordnet sein.

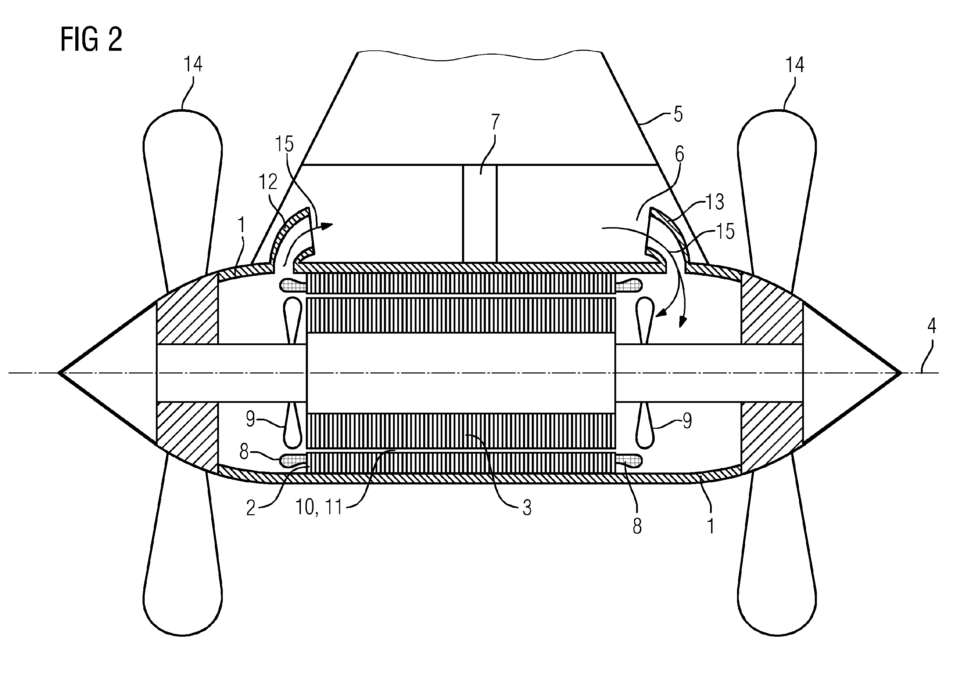

Figur 2 zeigt ein zweites Ausführungsbeispiel des erfindungsgemäßen elektrischen Gondelantriebs, wobei gleiche Bezugszeichen wie in Figur 1 gleiche Gegenstände bezeichnen. Gemäß dem zweiten Ausführungsbeispiel wird das Kühlmedium im geschlossenen Kühlkreislauf durch zwei Strömungsmaschinen 9 umgewälzt, wobei die Strömungsmaschinen 9 drehfest oder über ein jeweiliges Übersetzungsgetriebe mit einer Welle verbunden sind, welche wiederum drehfest mit dem Rotor 3 verbunden ist.

Um das zirkulierende Kühlmittel vom Gondelgehäuse 1 in den Schaftkanal 6 umzulenken, ist ein erstes Umlenkelement 12 vorgesehen. Dadurch wird erreicht, dass das in den Schaftkanal 6 eintretende Kühlmittel eine Strömungsrichtung aufweist, welche parallel zur Rotationsachse 4 des Elektromotors ist. Weiterhin ist ein zweites Umlenkelement 13 vorgesehen welches das parallel zur Rotationsachse 4 des Elektromotors strömende Kühlmittel in das Gondelgehäuse 1 umgelenkt. Dabei ist das erste Umlenkelement 12 als Umlenkdiffusor ausgeführt, wodurch die Strömungsgeschwindigkeit des Kühlmittels beim Eintritt in den Gondelschaft 6 verringert wird. Zur Erhöhung der Strömungsgeschwindigkeit des Kühlmittels beim Verlassen des Gondelschafts 6 ist das zweite Umlenkelement 13 als Umlenkdüse ausgeführt.

Jene Strömungsmaschine 9, welche strömungstechnisch im Anschluss an das zweite Umlenkelement 13 angeordnet ist, ist im Rahmen des zweiten Ausführungsbeispiels als Axial-Strömungsmaschine ausgeführt, welche das Kühlmedium in axialer Richtung insbesondere gegen einen aus dem Stator 3 ragenden Wickelkopf 8 und in den als Motorkanal 10 ausgeführten Luftspalt 11 presst. Weiterhin ist jene Strömungsmaschine 9, welche strömungstechnisch vor dem ersten Umlenkelement 12 angeordnet ist, als Radial-Strömungsmaschine ausgeführt, welche das Kühlmedium in radialer Richtung gegen den dort befindlichen Wickelkopf 8 und in das erste Umlenkelement 12 presst. Prinzipiell ist dabei auch denkbar, dass die beiden Strömungsmaschinen 9 des gleichen Typs sind, das heißt, dass beide als Axial-Strömungsmaschine oder beide als Radial-Strömungsmaschine ausgeführt sind.

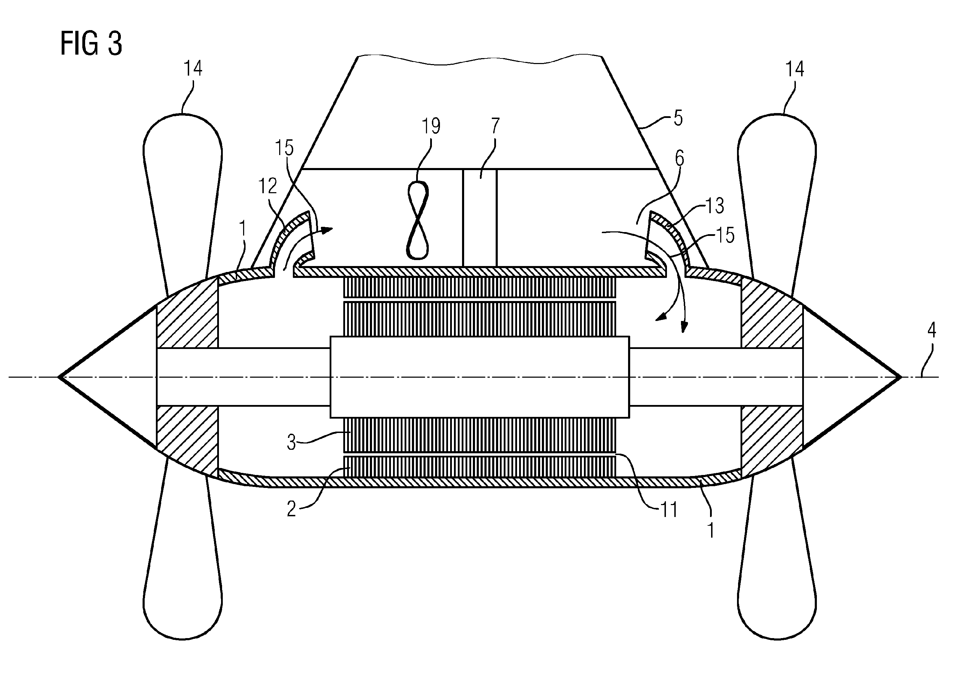

Figur 3 zeigt ein drittes Ausführungsbeispiel des erfindungsgemäßen elektrischen Gondelantriebs. Gemäß dem dritten Ausführungsbeispiel wird das Kühlmedium im geschlossenen Kühlkreislauf durch eine Strömungsmaschine 19 umgewälzt, welche im Schaftkanal 6 strömungstechnisch stromaufwärts des Rückkühlelement 7 angeordnet ist. Vorzugsweise ist die Strömungsmaschinen 19 dabei als Axial-Strömungsmaschine ausgeführt, welche das Kühlmedium durch das Rückkühlelement 7 presst. Zusätzlich können die Strömungsmaschinen 9 aus dem zweiten Ausführungsbeispiel vorgesehen sein.

Zusammenfassend betrifft die Erfindung einen elektrischen Gondelantrieb für ein Schiff aufweisend ein Gondelgehäuse, einen im Gondelgehäuse angeordneten Elektromotor mit einem Stator und einem Rotor, welcher koaxial zu einer Rotationsachse des Elektromotors angeordnet ist, und einen Gondelschaft, mittels welchem das Gondelgehäuse drehbar mit einem Schiffsrumpf verbindbar ist. Weiterhin betrifft die Erfindung ein Schiff mit einem derartigen elektrischen Gondelantrieb. Um eine Alternative zu bekannten Kühlkonzepten für einen elektrischen Gondelantrieb bereitzustellen, wird vorgeschlagen, dass der elektrische Gondelantrieb einen geschlossenen Kühlkreislauf aufweist, welcher im Gondelschaft und im Gondelgehäuse verläuft, wobei der geschlossene Kühlkreislauf zumindest einen im Gondelschaft angeordneten Schaftkanal, welcher im Wesentlichen parallel zur Rotationsachse des Elektromotors verläuft, und zumindest ein Rückkühlelement, welches zumindest teilweise im zumindest einen Schaftkanal angeordnet ist, aufweist, wobei der geschlossene Kühlkreislauf derart ausgestaltet ist, dass Abwärme des Elektromotors durch ein im geschlossenen Kühlkreislauf zirkulierendes Kühlmedium aufnehmbar ist und über das zumindest eine Rückkühlelement abgebbar ist.

## Patentansprüche

1. Elektrischer Gondelantrieb für ein Schiff aufweisend
- ein Gondelgehäuse (1),
- einen im Gondelgehäuse (1) angeordneten Elektromotor mit einem Stator (2) und einem Rotor (3), welcher koaxial zu einer Rotationsachse (4) des Elektromotors angeordnet ist, und
- einen Gondelschaft (5), mittels welchem das Gondelgehäuse (1) drehbar mit einem Schiffsrumpf verbindbar ist, **gekennzeichnet durch**
- einen geschlossenen Kühlkreislauf, welcher im Gondelschaft (5) und im Gondelgehäuse (1) verläuft,
wobei der geschlossene Kühlkreislauf zumindest einen im Gondelschaft (5) angeordneten Schaftkanal (6), welcher im Wesentlichen parallel zur Rotationsachse (4) des Elektromotors verläuft, und zumindest ein Rückkühlelement (7), welches zumindest teilweise im zumindest einen Schaftkanal (6) angeordnet ist, aufweist,
wobei der geschlossene Kühlkreislauf derart ausgestaltet ist, dass Abwärme des Elektromotors **durch** ein im geschlossenen Kühlkreislauf zirkulierendes Kühlmedium aufnehmbar ist und über das zumindest eine Rückkühlelement (7) abgebbar ist.

2. Elektrischer Gondelantrieb nach Anspruch 1,
wobei ein weiterer Kühlkreislauf vorgesehen ist, welcher über das zumindest eine Rückkühlelement (7) wärmetechnisch mit dem geschlossenen Kühlkreislauf gekoppelt ist.

3. Elektrischer Gondelantrieb nach Anspruch 1,
wobei das zumindest eine Rückkühlelement (7) derart ausgeführt ist, dass die Abwärme an den Gondelantrieb umgebendes Wasser abgebbar ist.

4. Elektrischer Gondelantrieb einem der vorhergehenden Ansprüche,
wobei der Stator zumindest einen Wickelkopf (8) aufweist, welcher jeweils mit dem im geschlossenen Kühlkreislauf zirkulierenden Kühlmedium kühlbar ist.

5. Elektrischer Gondelantrieb einem der vorhergehenden Ansprüche,
wobei zumindest eine Strömungsmaschine (9, 19) zur Umwälzung des im geschlossenen Kühlkreislauf zirkulierenden Kühlmediums vorgesehen ist.

6. Elektrischer Gondelantrieb nach Anspruch 5,
wobei die zumindest eine Strömungsmaschine (19) jeweils im zumindest einen Schaftkanal (6) strömungstechnisch stromaufwärts des zumindest einen Rückkühlelements (7) angeordnet ist.

7. Elektrischer Gondelantrieb nach einem der vorhergehenden Ansprüche,
wobei der geschlossene Kühlkreislauf zumindest einen Motorkanal (10) aufweist, welcher jeweils im Stator (2), im Rotor (3) und/oder entlang eines Luftspalts (11) zwischen dem Stator (2) und dem Rotor (3) verläuft.

8. Elektrischer Gondelantrieb nach einem der vorhergehenden Ansprüche,
wobei zumindest ein erstes Umlenkelement (12) vorgesehen ist, mittels welchem jeweils das vom Gondelgehäuse (1) in den zumindest einen Schaftkanal (6) strömende Kühlmedium umlenkbar ist,
wobei zumindest ein zweites Umlenkelement (13) vorgesehen ist, mittels welchem jeweils das vom zumindest einen Schaftkanal (6) in das Gondelgehäuse (1) strömende Kühlmedium umlenkbar ist.

9. Elektrischer Gondelantrieb nach Anspruch 8,
wobei das zumindest eine erste Umlenkelement (12) als Umlenkdiffusor ausgestaltet ist.

10. Elektrischer Gondelantrieb nach Anspruch 8 oder 9,
wobei das zumindest eine zweite Umlenkelement (13) als Umlenkdüse ausgestaltet ist.

11. Schiff mit einem elektrischen Gondelantrieb nach einem der vorhergehenden Ansprüche.
